# EUROPEAN PATENT SPECIFICATION

(11) **EP 1 731 454 B1**
(45) Date of publication and mention of the grant of the patent: **17.08.2011**
(21) Application number: 06010784.4
(22) Date of filing: 25.05.2006
(51) Int. Cl.: B65H 5/02, B65H 29/16, B65G 23/04

(54) **Sheet conveying apparatus and image forming apparatus**
Blattfördergerät und Bilderzeugungsgerät
Appareil de transport de feuilles et appareil de formation d'images

(30) Priority: 07.06.2005 JP 2005167502
(43) Date of publication of application: 13.12.2006
(73) Proprietor: CANON KABUSHIKI KAISHA, Tokyo (JP)
(72) Inventor: Matsumoto, Tadashi, Tokyo (JP); Iwanaga, Yoshiharu, Tokyo (JP)
(74) Representative: Weser, Wolfgang

(56) References cited:
- JP-B- 6 099 055
- US-A- 3 715 027
- US-A- 5 365 321
- US-A- 5 659 851

## Description

### BACKGROUND OF THE INVENTION

### Field of the Invention

The present invention relates to an apparatus for guiding a belt, and more particularly a belt guiding apparatus equipped with a control mechanism for preventing a belt skewing. The present invention also relates to a driving apparatus utilizing a belt guiding apparatus equipped with a control mechanism for preventing a belt skewing, a conveying apparatus utilizing such belt guiding apparatus, and an image forming apparatus equipped with such conveying apparatus. Related Background Art

There is known an image forming apparatus for forming a color image, utilizing a belt drive apparatus for driving an endless flat belt, called an intermediate transfer belt. In such image forming apparatus, toner images are formed on plural photosensitive drums serving as image bearing members of plural colors, and, before being transferred onto a recording sheet, at first transferred onto the intermediate transfer belt, and then collectively transferred onto such recording sheet.

Also the belt drive apparatus is employed in a sheet conveying apparatus for conveying a sheet as a recording medium.

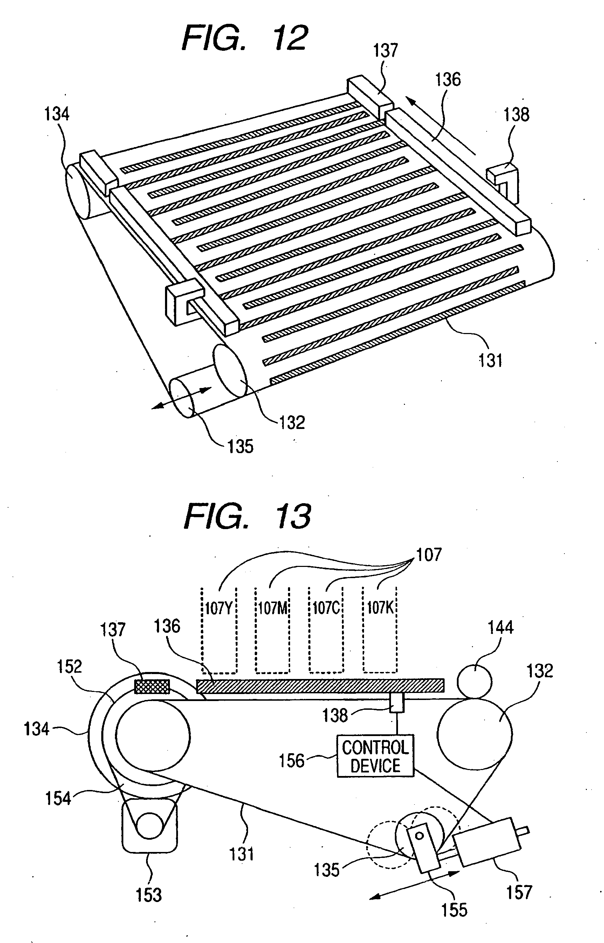

Figs. 12 and 13 illustrate a prior image forming apparatus utilizing a belt drive apparatus as the sheet conveying apparatus. A conveying belt 131 is supported by an idler roller 132, a drive roller 134 and a belt adjusting roller 135 and is rotated in a direction indicated by an arrow. The belt adjusting roller 135 serves to provide the conveying belt with a predetermined tension, and to correct a skew of the belt. The conveying belt 131 is provided with comb-like electrodes, parallel to a transversal direction of the belt, which is orthogonal to a conveying direction, and is also provided, on the belt surface, with an intermediate resistance layer for generating an attractive force in a contact area with the sheet. Also on both lateral ends of the conveying belt 131, electrostatic means 136 and charge eliminating means 137 are provided and apply a high voltage in contact with the comb-like electrodes to generate an electrostatic attractive force. Thus the sheet is fixed by electrostatic attraction to the conveying belt 131 and is advanced to an appropriate position corresponding to a recording head 107 in an image forming part. As a positional displacement of the sheet on the belt results for example in an unevenness in the image, the sheet is conveyed under an electrostatic attraction onto the conveying belt 131 for avoiding such positional displacement.

Also for monitoring a skew movement of the conveying belt '131, optical belt detection sensors 138 such as photointerruptors are provided on both lateral ends of the belt, and a control apparatus 156 shown in Fig. 13 detects a skew amount (zigzag movement amount) of the belt, based on a detection signal from the belt detection sensors 138. The belt adjusting roller 135 is rotatably supported by a roller bearing 155, which can be displaced by a motor 157. A drive signal for turning on/off the motor 157 is supplied from the control apparatus 156.

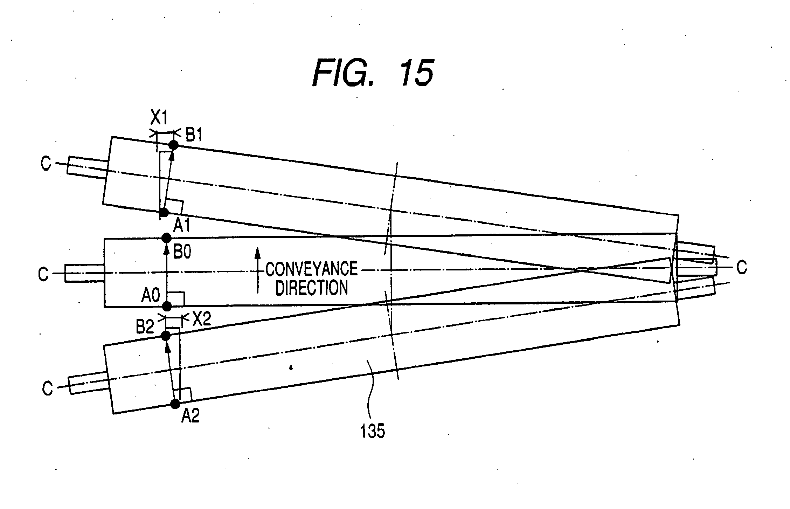

In such control mechanism for preventing belt skew, the belt adjusting roller 135 is pivoted, as shown in Fig. 15, about an end thereof at the far side by displacing the other end thereof at the near side, whereby the rotary axis C-C is displaced with respect to the conveying direction. When the belt adjusting roller 135 is not pivoted but remains parallel to the rotary axes of other rollers, the conveying belt 131 moves from a point A0 to a point B0 in Fig. 15 and does not generate a displacement (skew displacement) in the thrust direction of the roller. When the rotary axis C-C of the belt adjusting roller 135 is pivoted, the conveying belt 131 moves from A1 to B1 to generate a skew displacement ΔX1, or from A2 to B2 to generate a skew displacement ΔX2, whereby the conveying belt 131 is corrected by a displacement toward the near side. The belt detection sensor 138 detects such skew displacement and moves the belt adjusting roller 135 by a set displacement amount through the control apparatus 156, thereby appropriately correcting the running position of the conveying belt 131.

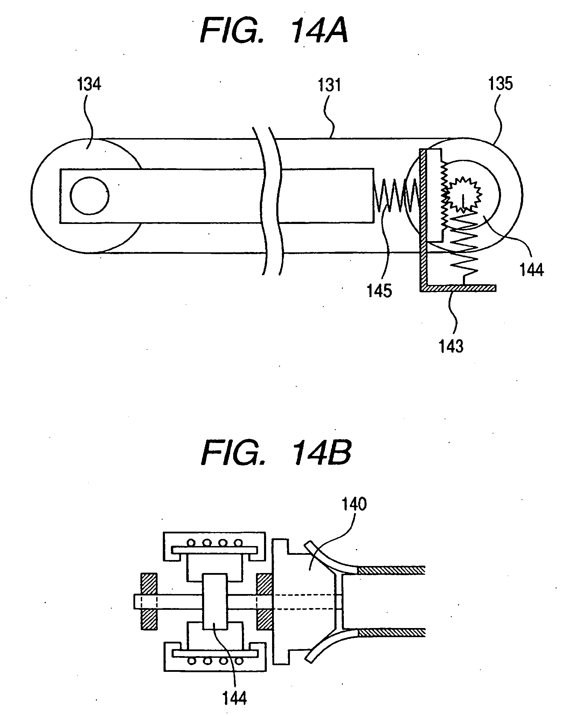

However, a high-speed running of the conveying belt 131 increases a skewing speed, thus often leading to a breakage or the like in the belt. Figs. 14A and 14B show a prior structure proposed for overcoming such drawback. Detection members 140 are provided independently rotatably on both ends of the belt adjusting roller 135, and a gear 144 provided on the rotary axis is integrally provided so as to move in synchronization with the detection member 140. A belt adjusting roller 135 is supported by a supporting bracket 143, which is provided with a rack gear 143 engaging with the gear 144 on the rotary axis of the roller. The supporting bracket 143 is mounted on a frame across a tension spring 145 for applying a tension to the belt, and a constant tension is applied to the.belt 131 by a spring force applied in the X-direction.

Also Japanese Patent.Publication No. H6-99055 discloses a belt drive apparatus having a function of correcting a zigzag movement of the belt.

However, such prior belt skew preventing mechanisms are associated with a following drawback that has to be resolved. In case the rotary axis C-C of the belt adjusting roller.135 is angularly displaced as shown in Figs. 14A and 14B, for executing the skew control of the intermediate transfer belt 131, the belt adjusting roller 135 is subjected to a force in the thrust direction, thus inducing an abrasion between the roller 135 and the bearing therefor by the frictional force in the thrust direction.

US 5,659,851 discloses an apparatus and method for passively steering an endless belt towards a lateral target belt position. A steering roller being rotatable about a roller axis and pivotable about a steering axis contacts the inner surface of the belt. A carriage supports the steering roller and is pivotable about the steering axis. A first member connected to the carriage and arranged at an end of the steering roller contacts the inner surface of the belt when a belt edge extends sufficiently beyond the roller end and applies a greater friction to the endless belt than the steering roller, thereby applying a torque to the carriage about the steering axis.

### SUMMARY OF THE INVENTION

In consideration of the foregoing, an object of the present invention is to provide a be it guiding apparatus and an image forming apparatus of a high reliability, capable of preventing an endless flat belt supported by plural conveying rollers, from a skew movement or a zigzag movement in the course of rotation thereof, thereby preventing an abrasion or a damage resulting from mutual friction of the component.

This object is achieved by the belt guiding apparatus of claim 1, and the image forming apparatus according to claim 8. The other claims relate to further developments.

In the belt guiding apparatus of the present invention, in case the flat belt causes an improper running such as a skew or zigzag movement, the lateral ends of the belt itself contact either one, or alternately contact both, of the first and second friction members provided on both end portions of the support member, and the supporting member moves with an angular change in the rotary axis thereof according to the difference of the frictional forces in such contacts, thereby correcting the belt, in an improper running, to a running in a proper position where the belt is in contact with the friction members on both sides of the supporting members. It is thus rendered possible to prevent the abrasion resulting from the friction between the components such as the belt itself and the roller bearing.

Also in the image forming apparatus of the present invention, particularly in case the flat belt is utilized as an intermediate transfer belt, a belt guiding apparatus having the above-described function allows to suppress a displacement of the intermediate transfer belt in the running thereof, whereby an exact and stable image transfer is made possible onto the surface of such belt.

### BRIEF DESCRIPTION OF THE DRAWINGS

Fig. 1 is a cross-sectional view showing an ink jet recording apparatus as an embodiment of an image forming apparatus of the present invention;
Fig. 2 is a perspective view showing a conveying belt provided in a sheet conveying apparatus of this embodiment;
Fig. 3 is a cross-sectional view showing a relationship between the conveying belt and an image forming part in this embodiment;
Figs. 4A and 4B are cross-sectional views of the conveying belt of this embodiment;
Figs. 5A, 5B and 5C are respectively an elevation view, a plan view and a lateral view of a belt control roller in this embodiment;
Fig. 6 is a lateral view schematically showing a function of the belt control roller of this embodiment;
Figs. 7A, 7B and 7C are respectively an elevation view, a plan view and a characteristic chart of the belt control roller of this embodiment;
Figs. 8A, 8B and 8C are schematic views showing operations of a zigzag movement control in this embodiment;
Figs. 9A and 9B are respectively an elevation view and a plan view of the belt control roller in this embodiment;
Figs. 10A and 10B are views showing an embodiment with a wrap angle of about 90°;
Fig. 11 is a view schematically showing a zigzag movement;
Fig. 12 is a perspective view showing an intermediate transfer belt and.a belt control roller in a prior structure;
Fig. 13 is a cross-sectional view showing the relationship between an intermediate transfer belt and an image forming part in a prior structure;
Figs. 14A and 14B are respectively an elevation view and a lateral view showing another prior belt skew preventing mechanism; and
Fig. 15 is a view schematically showing a zigzag movement.

### DESCRIPTION OF EMBODIMENTS

In the following, the sheet conveying apparatus and the image forming apparatus of the present invention will be explained by respective embodiments, with reference to the accompanying drawings. Embodiments will be given in an ink jet recording apparatus and a sheet conveying apparatus to be equipped therein, as a specific example of the image forming apparatus capable of evidently reflecting the purport of the present invention.

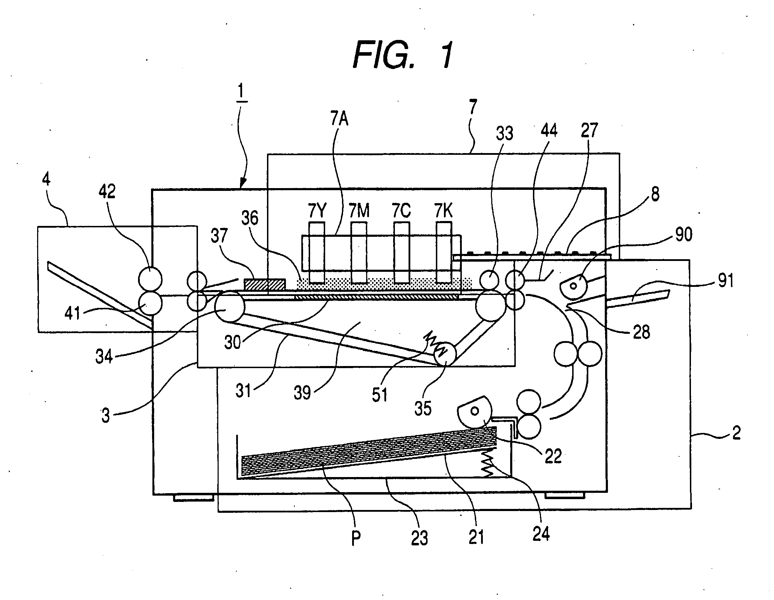

Referring to Fig. 1, an ink jet recording apparatus 1 is provided, in a main body thereof, with a sheet conveying apparatus including a sheet feed part 2, a conveying belt 3 and a sheet discharge part 4. A recording head 7 constituting recording means forms a color image on a sheet P or a recording medium, conveyed by the conveying belt 3. The sheet conveying apparatus is illustrated in an example including, in addition to an automatic sheet feeding device constituted of members and devices explained above, a manually-fed sheet feeding device.

The sheet feeding part 2 is provided with a pressure plate 21 for supporting a stack of sheets P in a cassette body 23, and a sheet feed roller, which is rotatably supported and serves to pick up and advance the sheets P one by one by a frictional force, to the exterior of the cassette. The pressure plate 21 is pivotably supported, at a rear end portion thereof in a sheet advancing direction, in the cassette body 23 by a rotary shaft. A pressure spring 24 mounted on the bottom side of the pressure plate 21 urges an uppermost sheet P toward the sheet feed roller 22. Also in a part of the pressure plate 21 opposed to the sheet feed roller 22, there is provided a separation pad of a material of a high friction coefficient, such as artificial leather, in order to avoid so-called superposed advancing, in which plural sheets P are advanced in a superposed state.

The cassette body 23 is further provided with a separating finger, which covers one of the corners of the sheet P, for enabling separation of a single sheet P, and a release cam for releasing the contact of the pressure plate 21 and the sheet feed roller 22 (both members being omitted from the illustration). In a stand-by state, the release cam presses the pressure plate 21 down to a predetermined position, whereby the pressure plate 21 is separated to a position not in contact with the sheet feed roller 22.

A driving power from a drive roller 34 is transmitted, for example through gears, to the sheet feed roller 22 and the release cam. Thus the pressure plate 21, upon being released from the release cam, is lifted to bring the sheet P in contact with the sheet feed roller 22, which is rotated to pick up the uppermost sheet P to initiate the sheet feeding. The sheet P is separated by the separating finger one by one and is advanced to the conveying belt 3. The sheet feed roller 22 rotates until the sheet P is advanced to the conveying belt 3, whereupon the stand-by state is resumed in which the sheets P are separated from the sheet feed roller 22 and the driving power from the drive roller 34 is turned off. Also a sheet feed roller 90 of a manual insert sheet feed device feeds a sheet P, set on a manual insertion tray 91, to the conveying belt 3 in response to a record command signal.

The sheet P, conveyed from the sheet feed part 2, impinges, at a leading end thereof, on a nip of a pair of registration rollers 44 positioned in front of the conveying belt 3, and is stopped in a state forming a loop of a predetermined amount, thereby being corrected from an eventual skewed position. Then, in response to a print start command signal from a main controller (not shown) in the main body of the apparatus, the registration rollers 44 start to rotate to advance the sheet P to the conveying belt 3.

A platen 30 supports a belt member 31 of the conveying belt 3 in a flat state from the.inner side, thereby inhibiting a downward displacement thereof. The platen 30 serves to assist that the sheet P on the belt member 31 is advanced to appropriate positions corresponding to respective color recording heads 7 (Y, M, C, K) of the image recording part (image forming part). Also in a position opposed to the idler roller 32, an attraction roller 33 is provided in contact with the belt member 31, so as to be rotated by the movement thereof. The attraction roller 33 is pressed to the belt member 31 by a spring (not shown), thereby guiding the sheet P to the recording head. Also at an upstream side of the conveying belt 3, there are provided an upper guide 27 and a lower guide 28 for guiding the sheet P to the registration rollers 44. At a downstream side of the idler roller 32, in the conveying direction of the recording sheet, a recording head 7 is provided as recording means for recording an image according to image information.

The sheet P advanced by the registration rollers 44 is conveyed by the idler roller 32 and the attraction roller 33, and the leading end of thus conveyed sheet P is detected by a PR sensor lever (not shown) thereby determining a recording position on the sheet P.

The recording head 7.is constituted of an ink jet recording head of line type, in which plural nozzles are arrayed along a direction orthogonal to the conveying, direction of the sheet P. In a sequential order from the upstream side in the conveying direction of the sheet P, recording heads of respective colors 7K (black), 7C (cyan), 7M (magenta) and 7Y (yellow) are arranged with predetermined gaps therebetween. These recording heads 7K, 7C, 7M and 7Y are supported by mounting on a head holder 7A. These recording heads execute a heating of ink to induce a film boiling therein, thereby discharging the ink from the nozzles of the recording heads utilizing a pressure change caused by a growth or a contraction of a bubble generated by such film boiling, and thus forming an image on the sheet P. The recording head 7 is made adjustable as to a distance (gap) between the nozzle face and the sheet P in the course of a recording operation. In a non-operating state, the recording head 7 is lifted and a cap 8 slides to cover the nozzle face of the recording head 7, thereby preventing the ink from solidification.

The sheet discharge part 4 is constituted of a sheet discharge roller 41 and a spur 42. The sheet P after image recording by the recording head'7 is pinched and conveyed by the sheet discharge roller 41 and the spur 42, thus being discharged to a sheet discharge tray 43. The sheet discharge roller 41 is driven by a driving power transmitted from the drive roller 34 through transmission means. The spur 42, in order to run on the printed surface after recording, has a small contact area with the sheet P, thereby not smearing or perturbing the image recorded on the sheet P even in contact with the printed surface after recording.

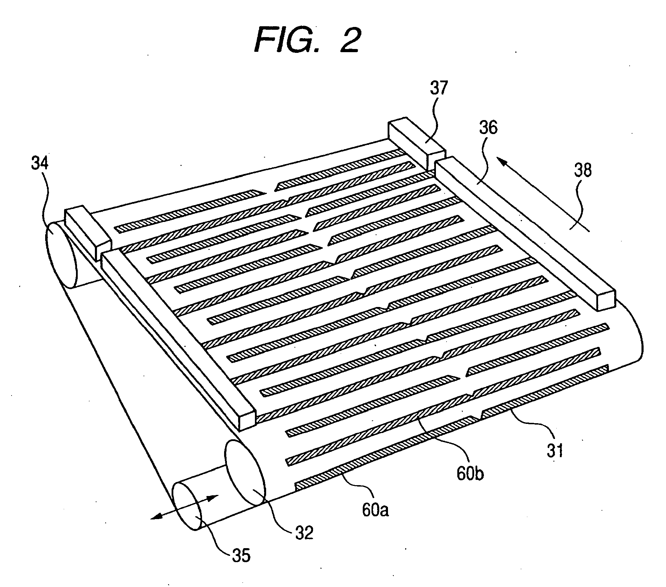

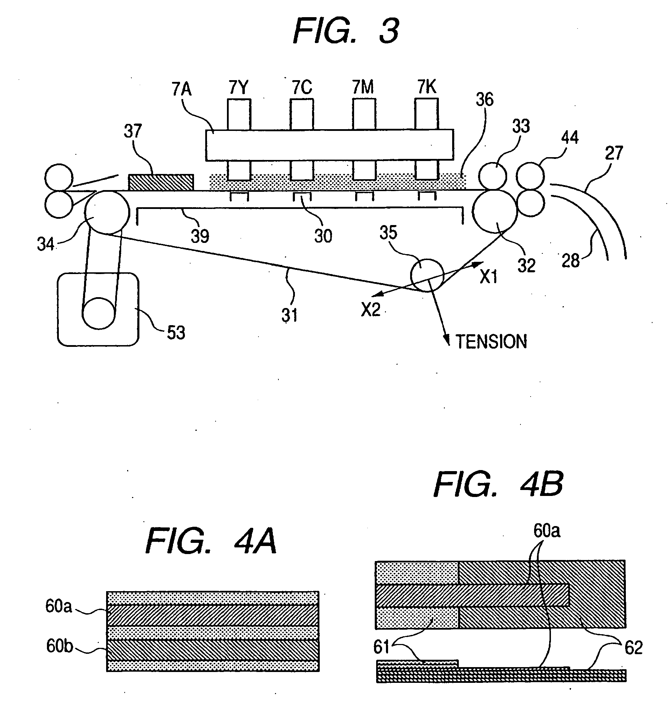

As shown in Figs. 2 and 3, the conveying belt 3 has an endless belt member 31 for conveying the sheet P thereon in an attracted state. The belt member 31 is supported by plural rollers including an idler roller 32, a drive roller 34 and a belt control roller 35, and is rotated by a driving power from the drive roller 34. The idler roller 32 and the drive roller 34 are rotatably supported on a frame 39 of the apparatus.

The belt control roller 35 is a principal member of a belt running adjusting mechanism featuring the present invention, and exerts a function as a tension roller for providing the belt member 31 with an appropriate tension, and a function of correcting an improper running in the belt member 31, such as a skew movement or a zigzag movement. The belt control roller 35 is rotatably supported, at both ends thereof, by a control roller frame 71 which is provided in the frame 39 of the apparatus so as to be capable of a rocking motion.

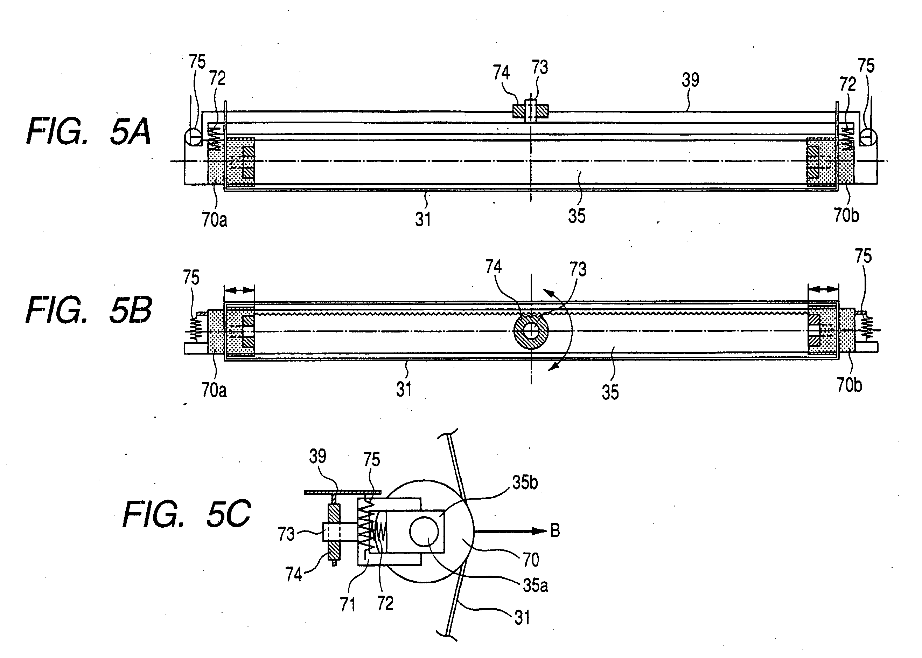

Now referring to Figs. 5A to 5C, first and second belt contact detecting portions 70a, 70b of a cylindrical shape are provided, unrotatably, on both ends of the control roller frame 71. The belt control roller 35 is rotatably supported, across such belt contact detecting portions 70a, 70b, by the control roller frame 71. The belt control roller 35 is rotated by the rotation of the belt member 31. The belt contact detecting portions 70a, 70b have a cylindrical shape of a curvature same as that of the roller, in order to generate a frictional force upon contacting the belt member 31, and, in case the belt member 31 causes a skew movement or a zigzag movement, it comes into contact with either of the belt contact detecting portions 70a and 70b. A surface area, in the belt contact detecting portions 70a, 70b, capable of contacting the belt member 31, has a frictional coefficient sufficient for generating a power for displacing the belt control roller 35 for a skew control of the belt member 31 to be explained later. In the present embodiment, the belt control roller 35 is formed by abrasion-resistant rubber, having a frictional coefficient k of 0.2 - 0.5 to the belt member 31.

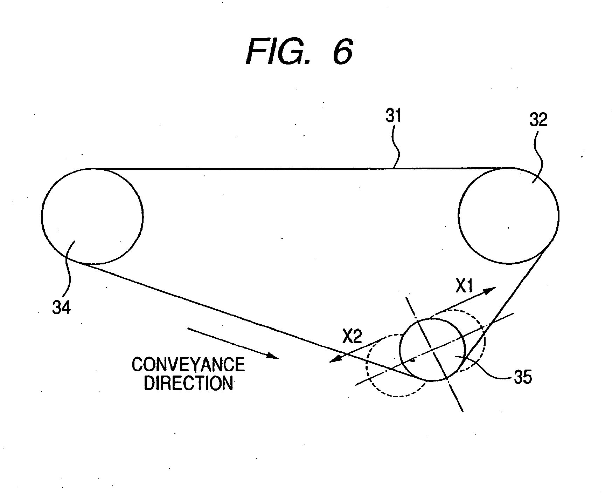

Also as shown in Fig. 5C, end shafts 35a of the belt control roller 35, protruding outwards from the belt contact detecting portions 70a, 70b are rotatably supported by bearings provided in movable pieces 35b. The movable piece 35B is supported, slidably in a direction B, by a split guide portion provided at each end of the control roller frame 71. Springs 72 urges the movable pieces 35B in a direction B, thereby providing the belt member 31 with a tension of 1.0 - 15 kgf (9.8 N - 147 N). In the present embodiment, a stable and highly precise conveying operation can be realized by a tension of 4.0 kgf (39.2 N). The control roller frame 71 is provided with a supporting shaft 73, at a center of a roller width, in the thrust direction of the belt control roller 35. The supporting shaft 73 is pivotably supported by a bearing provided in a bracket 74, so as to support the belt control roller 35 in an angularly variable manner. The bracket 74 is mounted on the frame 39 of the apparatus. The belt control roller 35 is capable of a rocking motion in directions X1, X2 shown in Fig. 6, about the supporting shaft 73 (displacing fulcrum). The first and second contract detection portions 70a, 70b are provided at positions of a same distance from the center of the supporting shaft 73.

Also compression springs 75 are provided as urging means between both ends of the control roller frame 71 and the frame 39, thus urging the belt control roller 35 toward a stationary position where the rotary axis thereof becomes parallel to the rotary axes of the drive roller 34 and the idler roller 32. The compression springs 75 serve to regulate, in a zigzag movement control to be explained later, a magnitude of the frictional forces generated by the belt contact detecting portions 70a, 70b for displacing the belt control roller 35. However, the compression springs 75 are not essential in the zigzag movement control.

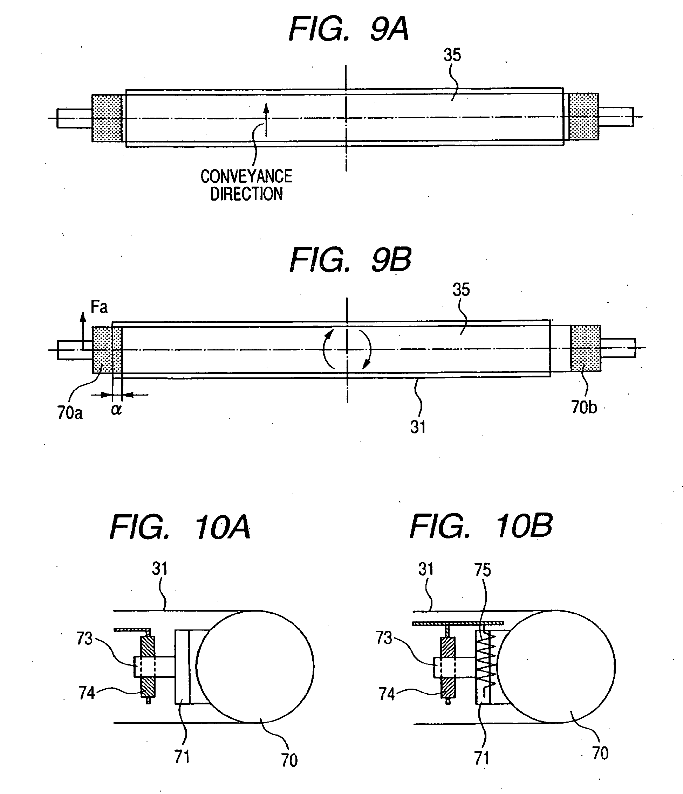

The drawings illustrate an example in which the belt member 31 is wound by a wrap angle of about 180° on the belt control roller. However, such wrap angle is not restrictive, and a same control theory is applicable also in case of a wrap angle of about 90° as shown in Figs. 10A and 10B. However, adjustments on the frictional coefficient and the like are necessary, because the generated frictional force becomes different.

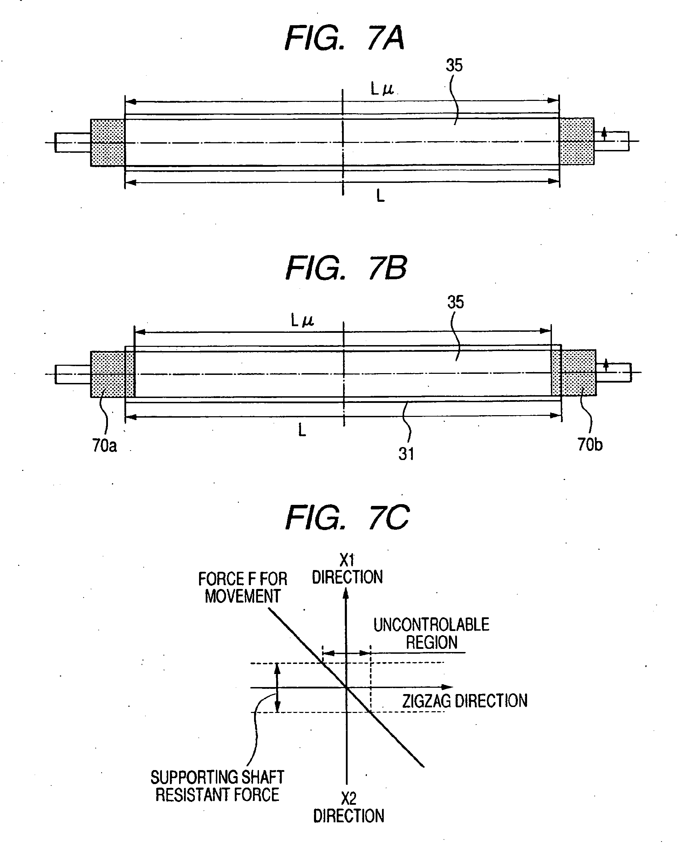

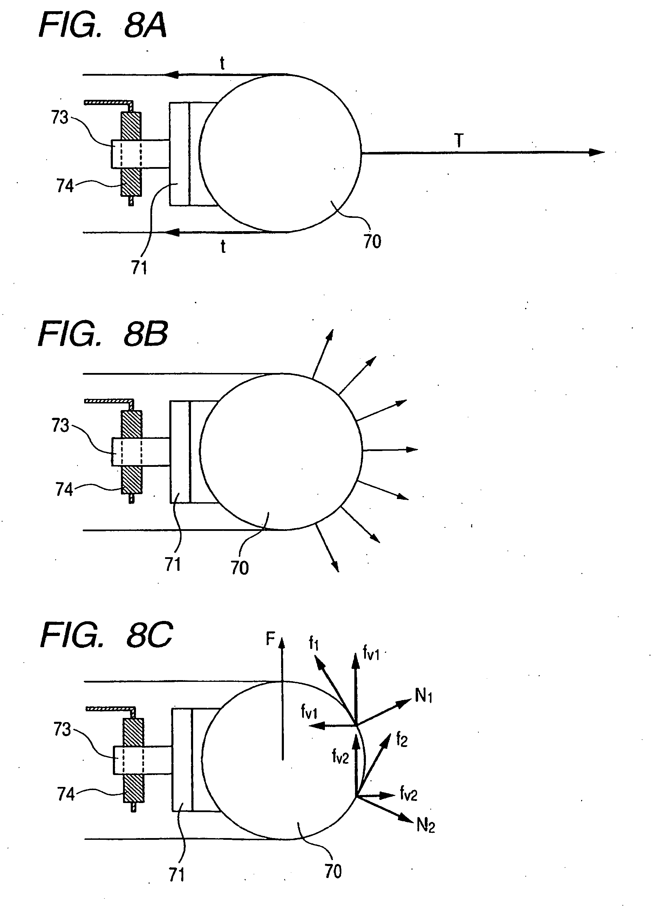

In case of a belt wrap angle of 180°, as shown in Figs. 7A - 7C and 8A - 8C, a tension t of 4 kgf (39.2 N) is given by the tension springs 72 to the belt member 31 of a width for example of about 350 mm. A drag N, acting on a surface in contact with the belt control roller 35, is constant in any position because of the cylindrical shape thereof, thus providing a relation N = t. When the belt member 31 is driven in such state, the belt control roller 35 rotates by being driven by the belt member 31. The belt contact detecting portions 70a, 70b, having an external shape same as that of the belt control roller 35 but provided unrotatably, generates a frictional force upon contact with the moving belt member 31. Such frictional force is represented by f1 = µN1, wherein µ is a friction coefficient between the rear surface of the belt and the contact surfaces of the belt contact detecting portions 70a, 70b, and is generated in a tangential advancing direction in the contact point. The belt contact detecting portions 70a, 70b, being mounted on both ends of the control roller frame 71 pivotable about the supporting shaft 73, are movable in a rotating plane perpendicular to the supporting shaft 73. A force F, for displacing the belt control roller 35, can be obtained by integrating a component, along such rotating plane, of the frictional force generated in the contact point of the belt contact detecting portions, over a contact area.

By employing a ball bearing in the bearing 74 for the supporting shaft 73, the control roller frame 71, which supports the belt member 31 of a width of 350 mm under a tension of 4 kgf (39.2 N), can be controlled by a force F of 10 kgf (98 N) which is a component in the rotating plane of the frictional force generated in the belt contact detecting portions. As the moving force F is variable depending on the tension, the resistance in the bearing, the belt width and so on, it is important to optimize the frictional forces in the belt contact detecting portions 70. In consideration of the durability, the friction in the belt contact detecting portions 70 is preferably made smaller, so that the force F required for the displacement should be made as small as possible.

When the belt member 31 has an effective width L equal to or smaller than a length Lµ of the belt control roller 35, and when a zigzag movement is generated as shown in Fig. 7A or 9A, the belt contact detecting portions 70a, 70b on both ends of the belt control roller 35 do not contact the belt member 31 and do not generate a frictional force. On the other hand, in case of a zigzag movement, when the belt member 31 is skewed to the left as shown in Fig. 9B, it comes into contact with the belt contact detecting portion 70a, which thus receives, from the belt member 31, a frictional force Fa in the advancing direction thereof. The frictional force Fa generates a moment of clockwise rotating the belt control roller 35 about the center corresponding to the supporting shaft 73. When the belt control roller 35 is pivoted clockwise by an angle corresponding to the frictional force Fa, the belt member 31 guided by the belt control roller 35 moves to the right whereby the skew is corrected. When the belt member 31 is skewed to the right, the belt contact detecting portion 70b at the right side receives, from the belt member 31, a frictional force Fb in the advancing direction thereof. The frictional force Fb causes a counterclockwise pivoting of the belt control roller 35, whereby the belt member 31 is displaced to the left to correct the skew.

In an embodiment according to the present invention and shown in Fig. 7B, the effective width L of the belt member 31 and the distance Lµ between the belt contact detecting portions 70a, 70b on both ends of the roller have a relationship L > Lµ. When the belt member 31 is in an appropriate position relative to the rollers, the frictional forces received by the belt contact detecting portions 70a, 70b from the belt member 31 are mutually equal. However, when the belt member 31 is skewed to either side, the belt contact detecting portion 70 in such skewed side shows an increased contact area with the belt member 31, whereby the frictional force received from the belt member increases in proportion to the distance of displacement. On the other hand, the belt contact detecting portion 70 on the other side shows a decreased contact area with the belt member 31, whereby the received frictional force decreases. As a result, the frictional forces acting on the left and right belt contact detecting portions 70a, 70b become mutually different, thus generating a moment for pivoting the control roller frame 71 in such a direction as to correct the skew of the belt member 31. Fig. 7C is a chart showing a relationship between a displacement amount of the belt member 31 and a force F for pivoting the control roller frame 71. In Fig. 7C, the slope of the line is determined by the frictional force generated between the rear surface of the belt member 31 and the belt contact detecting portions 70a, 70b.

As explained in the foregoing, the zigzag movement control of the present embodiment can correct the displacement of the belt member 31 by a force, of which magnitude always corresponds to the positional displacement of the belt member 31. Also in case the frictional durability is lowered between the belt member 31 and the belt contact detecting portions 70a, 70b, the slope of the line becomes smaller, thereby expanding a control impossible range, since the control is not possible unless a force exceeding a pivoting resistance of the supporting shaft 73 is obtained. Such situation can however be avoided by selecting the distance Lµ between the belt contact detecting portions 70a, 70b in anticipation of such situation.

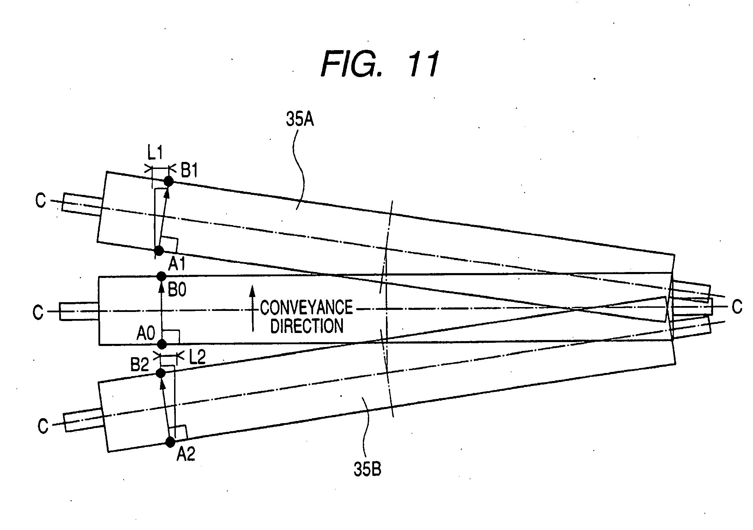

Now reference is made to Fig. 11 for reconfirming the behaviors in the zigzag movement control. In Fig. 11, 35 indicates the belt control roller, and it is assumed that the belt member runs the front side of the belt control roller, with respect to the plane of the drawing.

In the belt control roller 35 in a state without a zigzag movement, the belt member comes into contact with the belt control roller 35 at a point A0, and remains in contact to a point B0 wherein the belt member leaves the roller. In such case, there is not generated a force for displacing the belt member in a direction orthogonal to the conveying direction.

When the belt member is skewed to the left side, the belt member runs, as shown in Fig. 9B, slipping on the surface of the belt contact detecting portion 70a. In response, a frictional force Fa acts on the belt contact detecting portion 70a, thereby shifting the belt control roller 35 to a position 35A shown in Fig. 11. As a result, a point on the belt member 31, coming into contact with the belt control roller 35 at a point A1 in Fig. 11 leaves the belt control roller at a point B1. Therefore, when there is no slippage in the thrust direction, the belt member 31 is rightward displaced by a distance L1, perpendicularly to the conveying direction. Thus the skew of the belt member to the left side can be corrected.

On the other hand, when the belt member skews to the right, a frictional force Fb acts from the belt member 31 to the belt contact detecting portion 70b, thereby shifting the belt control roller 35 to a position 35B shown in Fig. 11. As a result, a point on the belt member 31, coming into contact with the belt control roller 35 at a point A2 in Fig. 11 leaves the belt control roller at a point B2. Therefore, the belt member 31 is leftward displaced by a distance L2, thus correcting the skew of the belt member.to the right side.

Thus, the belt member 31, in an eventual zigzag movement, can always be returned to the normal position.

It is thus possible to achieve a control by a small difference in the friction, utilizing a frictional force generated in either of the belt contact detecting portions 70a, 70b provided on both ends of the belt control roller or utilizing a difference in the frictional forces generated in both detection portions, and to realize a stabilized conveying operation for the recording sheet P, under a constant monitoring of the skew in the belt 3 and a stable rotation of the belt member 31.

Figs. 4A and 4B are partial cross-sectional views of the belt member 31. The belt member 31, rotated while supporting the sheet P by attraction, is provided with electrodes 60a, 60b which are formed by conductive metals arranged in such a pattern as to generate a strong electrostatic attractive force, and which are protected by a laminate structure of a base layer 62 and a surface layer 61. The base layer 62 is formed by a synthetic polymer resin.such as of polyethylene or polycarbonate, while the surface layer 61 is formed by a synthetic resin such as a fluorinated resin, controllable in resistance for generating an optimum electrostatic force, and these layers are formed in an endless belt shape. These layers are mutually adjoined for example with an adhesive material or by thermal fusion. The electrodes 60a, 60b are formed in mutually opposed comb-like patterns with plural teeth arranged in a direction perpendicular to the conveying direction of the belt. On both lateral end portions of the belt member 31, the surface layer 61 is eliminated to expose the electrodes 60a, 60b for enabling power feeding brushes 36 to apply a high voltage.

The base layer 62 constituting the belt member 31 is formed by winding a sheet (20 µm) constituted of a thermal plastic resin and a thermosetting resin by plural turns (5 turns), followed by thermal fusing, thereby obtaining a sheet of a thickness of 100 µm*.* Then a thermosetting surface material is wound also in plural turns and thermally fused to complete the belt. During such process, electrodes 60 are formed, in the state of the base layer sheet, in predetermined positions thereon, whereby such electrodes are provided in a position predetermined within the thickness of the belt. The electrodes may be formed by printing a conductive paint, or by depositing a conductive resin and executing thermal fusion collectively. Such laminate structure improves uniformity of the belt after formation and secures a stable precision.

A voltage of about 0.5 - 10 kV is applied to the power supply brushes 36 which is in contact with the belt member 31, thereby generating an attractive force in the belt member 31 in the recording positions below the recording heads 7. The power supply brushes 36 are connected to a high-voltage source (not shown) for generating a predetermined high voltage. At the sheet discharge, the charge of the electrodes 60 is eliminated by the charge eliminating brush 37 whereby the attractive force is lost and the sheet is separated and advanced to the sheet discharge part 4.

The present invention may also be realized in other embodiments or in modifications or variations of such embodiments within an extent not departing from the scope of the claims.

## Claims

1. A belt guiding apparatus comprising:
a roller (35) maintained in contact with and driven by a moving belt (31);
a support member (71,72, 75) for rotatably supporting the roller;
a support means (39, 73, 74) which pivotably supports the support member in such a manner that the roller can change a direction of a rotary axis (C) thereof;
a first friction member (70a) so provided as to pivot integrally with the support member and receiving, from the belt, a frictional force which becomes larger as the belt is displaced from a predetermined position to a first lateral direction; and
a second friction member (70b) so provided as to pivot integrally with the support member and receiving, from the belt, a frictional force which becomes larger as the belt is displaced from the predetermined position to a second lateral direction opposite to the first lateral direction;
wherein the support member pivots together with the first and second friction members, by the frictional force which the first or second friction member receives from the belt, to change the direction of the rotary axis of the roller thereby correcting the displacement of the belt,
**characterized in that** the distance (Lµ) from the first friction member to the second friction member is smaller than a width (L) of the belt (31).

2. The apparatus according to claim 1, wherein the first and second friction members (70a, 70b) are unrotatably fixed to the support member.

3. The apparatus according to claims 1 or 2, wherein the first friction member (70a) has a larger contact area with the belt (31) when the belt (31) is displaced from the predetermined position to the first lateral direction.

4. The apparatus according to claims 1 or 2, wherein the second friction member (70b) has a larger contact area with the belt (31) when the belt (31) is displaced from the predetermined position to the second lateral direction.

5. The apparatus according to any one of claims 1 to 4, wherein the first and second friction members (70a, 70b) are positioned at lateral sides of the roller.

6. The apparatus according to any one of claims 1 to 5, wherein a rotation center of the support member is positioned at a longitudinal center of the roller.

7. The apparatus according to any one of claims 1 to 6, wherein a distance from the rotary center of the support member to the first friction member (70a) is equal to a distance from the rotary center of the support member to the second friction member (70b).

8. An image forming apparatus (1) comprising:
the belt guiding apparatus (3) according to any one of claims 1 to 7 for conveying a recording medium by said belt (31); and
recording means (7) for recording an image on said recording medium (P) to be conveyed by the belt.

## Patentansprüche

1. Bandführungsvorrichtung, umfassend:
eine Walze (35), die mit einem sich bewegenden Band (31) in Kontakt gehalten und durch dieses angetrieben wird;
ein Stützelement (71, 72, 75) zum drehbaren Stützen der Walze;
eine Stützeinrichtung (39, 73, 74), die das Stützelement schwenkbar stützt derart, dass die Walze eine Richtung ihrer Drehachse (C) ändern kann;
ein erstes Reibungselement (70a), das derart vorgesehen ist, um zusammen (engl. "integrally") mit dem Stützelement zu schwenken, und das vom Band eine Reibungskraft aufnimmt, welche größer wird, wenn das Band aus einer vorbestimmten Position in eine erste Seitenrichtung versetzt wird; und
ein zweites Reibungselement (70b), das derart vorgesehen ist, um zusammen mit dem Stützelement zu schwenken, und das vom Band eine Reibungskraft aufnimmt, welche größer wird, wenn das Band aus der vorbestimmten Position in eine zweite, zur ersten entgegengesetzten Seitenrichtung versetzt wird;
wobei das Stützelement zusammen mit dem ersten und dem zweiten Reibungselement schwenkt, und zwar durch die Reibungskraft, die das erste oder das zweite Reibungselement vom Band aufnimmt, um die Richtung der Drehachse der Walze zu ändern und **dadurch** die Versetzung des Bandes zu korrigieren,
**dadurch gekennzeichnet, dass**
der Abstand (Lµ) vom ersten Reibungselement zum zweiten Reibungselement kleiner als eine Breite (L) des Bandes (31) ist.

2. Vorrichtung nach Anspruch 1, wobei
das erste und das zweite Reibungselement (70a, 70b) nicht drehbar am Stützelement fixiert sind.

3. Vorrichtung nach Anspruch 1 oder 2, wobei das erste Reibungselement (70a) einen größeren Kontaktbereich mit dem Band (31) hat, wenn das Band (31) aus der vorbestimmten Position in die erste Seitenrichtung versetzt wird.

4. Vorrichtung nach Anspruch 1 oder 2, wobei das zweite Reibungselement (70b) einen größeren Kontaktbereich mit dem Band (31) hat, wenn das Band (31) aus der vorbestimmten Position in die zweite Seitenrichtung versetzt wird.

5. Vorrichtung nach einem der Ansprüche 1 bis 4, wobei das erste und das zweite Reibungselement (70a, 70b) an den Seitenenden der Walze angeordnet sind.

6. Vorrichtung nach einem der Ansprüche 1 bis 5, wobei sich ein Drehmittelpunkt des Stützelements auf der Längsmitte der Walze befindet.

7. Vorrichtung nach einem der Ansprüche 1 bis 6, wobei ein Abstand vom Drehmittelpunkt des Stützelements zum ersten Reibungselement (70a) gleich einem Abstand vom Drehmittelpunkt des Stützelements zum zweiten Reibungselement (70b) ist.

8. Bilderzeugungsvorrichtung (1), umfassend:
die Bandführungsvorrichtung (3) nach einem der Ansprüche 1 bis 7 zum Befördern eines Aufzeichnungsmediums durch das Band (31); und
eine Aufzeichnungseinrichtung (7) zum Aufzeichnen eines Bilds auf dem vom Band zu befördernden Aufzeichnungsmedium (P).

## Revendications

1. Dispositif de guidage de bande comprenant :
un rouleau (35) maintenu en contact avec une bande mobile (31) et entraîné par celle-ci ;
un organe support (71, 72, 75) destiné à supporter le rouleau de façon mobile en rotation ;
un moyen (39, 73, 74) formant support qui supporte de façon pivotante l'organe support de façon que le rouleau puisse changer la direction de son axe (C) de rotation ;
un premier organe (70a) à friction prévu de façon à pivoter d'un seul tenant avec l'organe support et recevant, de la bande, une force de frottement qui devient plus grande à mesure que la bande se déplace, par rapport à une position prédéterminée, dans un premier sens transversal ; et
un second organe (70b) à friction prévu de façon à pivoter d'un seul tenant avec l'organe support et recevant, de la bande, une force de frottement qui devient plus grande à mesure que la bande se déplace, par rapport à la position prédéterminée, dans un second sens transversal opposé au premier sens transversal,
dans lequel l'organe support pivote conjointement avec les premier et second organes à friction, sous l'effet de la force de frottement que reçoit de la bande le premier ou le second organe à friction, pour changer la direction de l'axe de rotation du rouleau en corrigeant ainsi le déplacement de la bande,
**caractérisé en ce que** la distance (Lµ) du premier organe à friction au second organe à friction est plus petite que la largeur (L) de la bande (31).

2. Dispositif selon la revendication 1, dans lequel les premier et second organes (70a, 70b) à friction sont fixés à l'organe support sans pouvoir tourner.

3. Dispositif selon les revendications 1 ou 2, dans lequel le premier organe (70a) à friction a une superficie de contact plus grande avec la bande (31) lorsque la bande (31) se déplace à partir de la position prédéterminée dans le premier sens transversal.

4. Dispositif selon les revendications 1 ou 2, dans lequel le second organe (70b) à friction a une superficie de contact plus grande avec la bande (31) lorsque la bande (31) se déplace à partir de la position prédéterminée dans le second sens transversal.

5. Dispositif selon l'une quelconque des revendications 1 à 4, dans lequel les premier et second organes (70a, 70b) à friction sont placés au niveau des côtés latéraux du rouleau.

6. Dispositif selon l'une quelconque des revendications 1 à 5, dans lequel le centre de rotation de l'organe support est placé au centre longitudinal du rouleau.

7. Dispositif selon l'une quelconque des revendications 1 à 6, dans lequel la distance du centre de rotation de l'organe support au premier organe (70a) à friction est égale à la distance du centre de rotation de l'organe support au second organe (70b) à friction.

8. Appareil (1) de formation d'image comprenant :
le dispositif (3) de guidage de bande selon l'une quelconque des revendications 1 à 7 destiné à faire défiler un support d'enregistrement à l'aide de ladite bande (31) ; et
un moyen (7) d'enregistrement destiné à enregistrer une image sur ledit support (P) d'enregistrement que la bande fait défiler.
